## Europäisches Patentamt

## European Patent Office

## Office européen des brevets

(11) Publication number: **0 217 758**
**B1**

## EUROPEAN PATENT SPECIFICATION

(45) Date of publication of the patent specification:
27.12.90

(51) Int. Cl.⁵: **G01N 29/04**

(21) Application number: **86830252.2**

(22) Date of filing: **12.09.86**

(54) Method and apparatus for detecting production cracks in mechanical parts made by pressing.

(30) Priority: **30.09.85 IT 6783385**

(43) Date of publication of application:
**08.04.87 Bulletin 87/15**

(45) Publication of the grant of the patent:
**27.12.90 Bulletin 90/52**

(84) Designated Contracting States:
**DE FR GB SE**

(56) References cited:
**DE-A- 2 757 355**
**DE-A- 3 342 463**
**DE-C- 749 940**
**FR-A- 1 081 609**
**GB-A- 1 131 075**
**GB-A- 1 290 978**

**PATENT ABSTRACTS OF JAPAN, vol. 10,
no. 41 (P-429)[2098], 18th February 1986 &
JP-A-60-186 753
SOVIET INVENTIONS ILLUSTRATED, Section Physical,
Week C13, 7th May 1980, abstract no. C9161C/13 R16,
Derwent Publications Ltd., London, GB; & SU - A
- 675 356 (THERM TECH RES INST) 27-07-1979**

(73) Proprietor: **FIAT AUTO S.p.A., Corso Giovanni
Agnelli 200, I-10135 Torino(IT)**

(72) Inventor: **Ansaldi, Ermanno, Via Cavallermaggiore 19,
I-10139 Torino(IT)**
Inventor: **Alpini, Alessandro, Via Volante 110,
I-10133 Torino(IT)**

(74) Representative: **Bosotti, Luciano et al, c/o
Jacobacci-Casetta & Perani S.p.A. Via Alfieri, 17,
I-10121 Torino(IT)**

**Description**

BACKGROUND OF THE INVENTION

The present invention relates generally to the problems of detecting and indicating the presence of production cracks in mechanical parts (drawn parts) made by pressing between a punch and a die.

As examples of mechanical parts of this type, the various metal parts constituting the body of a motor vehicle may be mentioned.

The cracks which occur during the pressing operation are typically localised in the regions of the part subjected to the most intense plastic deformation (drawing).

Although we do not wish to be tied to a specific theory, the cracks may in fact arise from the effects of stretching or contraction of the metal constituting the part. Such stretching or contraction usually arises when the interaction of the punch with the die becomes too tight, at least in some regions of the part, due to wear or slight relative displacement during the working cycle.

The production cracks most usually take the form of tears or fissures which are detectable by visual examination. In other cases, however, the cracks are not immediately perceptible and their presence may be detected only after assembly of the part or, indeed, only by the user of the final product after a certain period of use.

In other cases, as well as not being completely reliable, visual inspection of the parts is an operation which is difficult to carry out in a manner compatible with high production rates on the pressing lines currently used in the metallurgical and mechanical industries and particularly in the motor vehicle industry.

It should also be noted that, even though the actual percentage of parts with production cracks is very low (of the order of 1%), the final incidence of the phenomenon in absolute terms is considerable due to the high production levels.

OBJECT OF THE INVENTION

The object of the present invention is thus to enable the presence of production cracks in mechanical parts obtaines by pressing to be detected in accordance with criteria which enable the detection operation to be carried out "in process", that is, during the pressing operation. The solution of the invention, however, must enable the checking to be carried out in an easily automated manner with results having a degree of reliability such as to minimise the incidence of such cracks not only in percentage terms but also in absolute terms.

More specifically, the present invention relates to a method having the features set forth in the precharacterising portion of Claim 1, which is known, for instance, from GB-A 1 131 075. Somewhat similar arrangements are known also from Soviet Inventions Illustrated, Section Physical, Week C13, 7th May 1980, abstract No. CO161C/13R16-Derwent Publications Ltd, London GB; & SU-A 675 356 (THERM TECH RES INST) 27.07.79 or FR-A 1 081 609.

SUMMARY OF THE INVENTION

According to the present invention the object defined above is achieved by virtue of a method having the further features called for in Claim 1.

According to a first embodiment, the method of the invention includes the step of generating, during pressing, ultrasonic vibrations, hereinafter "ultrasounds", in air in the predetermined regions and on the side of the part being pressed which faces one of the punch and the die, and the step of detecting the presence of ultrasounds in air in the predetermined regions and on the side of the part being pressed which faces the other of the punch and the die.

In other words, in this first embodiment, the propagation of ultrasounds in air through the mechanical part being pressed is detected – this being indicative of the presence of production cracks.

According to another embodiment, the method of the invention includes the step of supplying pressurised air to the surface of the predetermined regions of the part being pressed during pressing.

According to this second embodiment, in order to detect the presence of production cracks, use is made of the phenomenon in which the part itself, by interaction with the pressurised air flow directed at its surface, generates ultrasounds in air which can propagate through the cracks which may be present in the part. The detection of the presence of these ultrasounds thus enables the presence of production cracks to be deduced.

The present invention also provides apparatus which enables the presence of production cracks to be detected in predetermined regions of mechanical parts made by pressing, in accordance with the method described above.

DETAILED DESCRIPTION OF THE INVENTION

The invention will now be described, purely by way of non-limiting example, with reference to the appended drawings, in which:

Figures I and 2 illustrate schematically the physical principle on which the invention is based, with reference to two possible embodiments of the invention itself,

Figures 3 and 4 are two time graphs illustrating schematically the changes in two signals which can be detected by the use of the method of the invention, in a mechanical part free from production cracks and in a mechanical part including cracks of this type, respectively, and

Figure 5 illustrates schematically the internal structure of part of the apparatus of the invention, in block schematic form.

In order to facilitate the explanation and understanding of the invention, it is specified that, in the present specification and in the following claims:
- "production cracks" is intended to indicate all those anomalies such as tears, fissures, cracks, etc., which may occur in a part manufactured by pressing as a consequence of the deformation (drawing) to which the part, usually of metal, is subject;

- the term "punch and die" generally indicates the two bodies with complementary shapes (also termed die and matrix, etc.) which plastically deform the part in order to give the part itself the final conformation by means of an operation generally termed "pressing";

- the term "during the pressing operation (or cycle)" or, more briefly, "during pressing" indicates those operations carried out during the pressing steps in which there is relative movement between the punch and the die (as defined above) and in the immediately subsequent steps in which the pressed part is still between the punch and the die;

- the term "ultrasounds in air" is intended to indicate generally all those vibrations or ranges of wave forces which are propagated in a gaseous medium and generally have frequencies ranging from frequencies immediately above the range of audible frequencies to l00kHz and beyond; more particularly, the term "in air" - which should be understood as extending in general to all gaseous media - is intended to distinguish ultrasounds used in the present invention from ultrasounds which are propagated in liquids or in solids (for example, in a metal such as that constituting the part subjected to pressing).

In Figures l and 2 a region of a mechanical part of metal (for example, sheet metal of the $FePO_4$ type) subjected to pressing between a punch or die P and a die or matrix C is generally indicated S.

By way of example, the part T, only partially shown in the drawings, may constitute the so-called framework of the door of the motor vehicle, while the region S constitutes one of the parts of this framework.

In each case the region S under examination is one of the regions in which the plastic deformation or drawing characteristic of the pressing operation is most marked.

The general criteria for carrying out this operation are known in the art and will not therefore be described in the present specification in that they are not essential for the understanding of the invention. For this purpose, it should be noted, however, that during the prolonged performance of successive pressing operations (which are carried out in the motor vehicle industry, for example, with rates of the order of about five pressing operations per minute) deterioration or wear or slight relative movements between the punch and the die may occur, which can bring about production defects such as tears, fissures or cracks. These defects occur in the region S and are such as to prejudice the mechanical strength and working life of the part T. The occurrence of cracks may also arise from non-uniformities in the material (sheet metal) constituting the part which is pressed and/or from the presence of solid, hard particles thereon.

For an orderly description, reference is made initially to the right-hand part of Figures l and 2 where a duct or guide which can allow the propagation within it of ultrasounds in air (as previously defined) is indicated l.

The ducts or guides l are of known type and are readily available on the market. For this purpose, reference may be made to the plastics guides or ducts tested positively for ultrasonic transmissions and known under the trade name "RINSAL".

The duct l has a first end 2 which extends through the punch P so as to face the surface of the part T being produced.

At its opposite end 3, however, the guide 2 terminates at an ultrasound detector 4, the detector 4 being sensitive to the intensity of the train of ultrasonic pressure waves propagated within the guide l and generating at its output 5 an electrical signal which changes correspondingly. Preferably, the ultrasound detector 4 operates in a range of frequencies of around 40kHz.

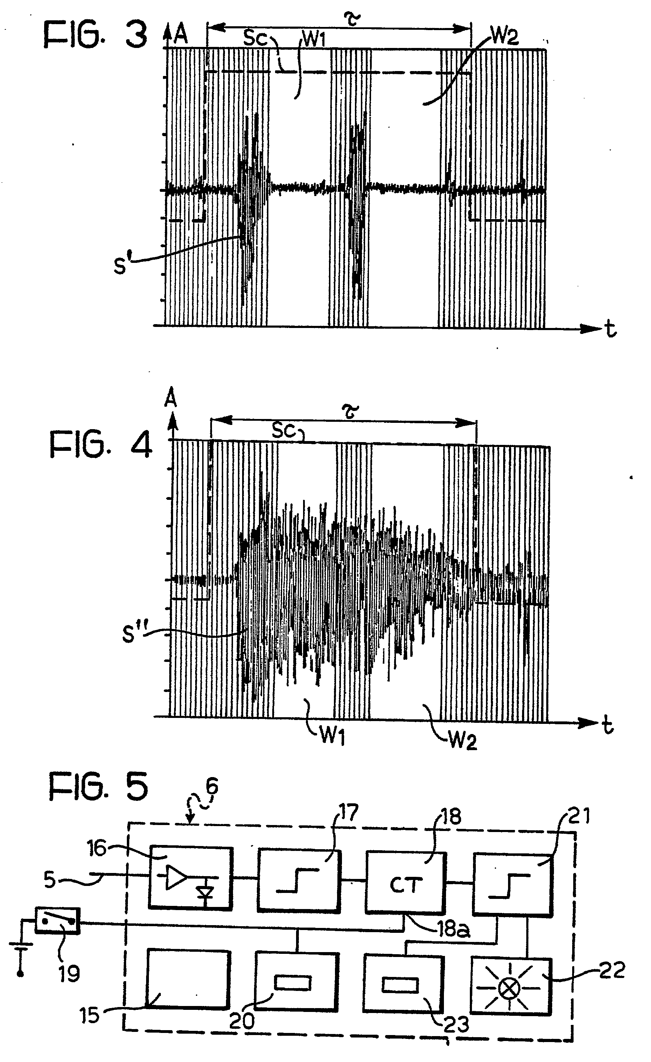

The output 5 of the detector 4 is connected to a signal processing circuit 6 the structure of which will be better explained below with reference to Figure 5.

A further duct or guide, structurally identical to the duct l, is indicated 7 in Figure l and can enable and guide the propagation of ultrasounds in air within it.

The duct or guide 7 also has an end 8 which extends through the die C in such a position that, during the pressing operation, the end 8 is in fact applied to the surface of the part T.

However, the opposite end of the duct 7, indicated 9, terminates at an ultrasound generator l0 which can release into the guide or duct 7 an ultrasonic signal within a frequency range of around 40kHz, corresponding to the maximum sensitivity range of the detector 4.

Naturally, several pairs of "transmitting" and "receiving" guides or ducts 7, l may be provided in the punch P and the die C, these facing each other in correspondence with zones of the part T in which the formation of production cracks is probable. In general, the ducts or guides l and 7 may be very short depending upon the manner in which the connection is made adjacent the part subjected to "in process" checking.

The criteria which enable the coupling of several receiving ducts l to a single detector 4 and several transmitting ducts 7 to a single ultrasound generator l0 are generally known in the art and will not therefore be discussed further since the invention can be effectively described and understood with reference to the operating criteria of only one of these pairs of ducts or guides.

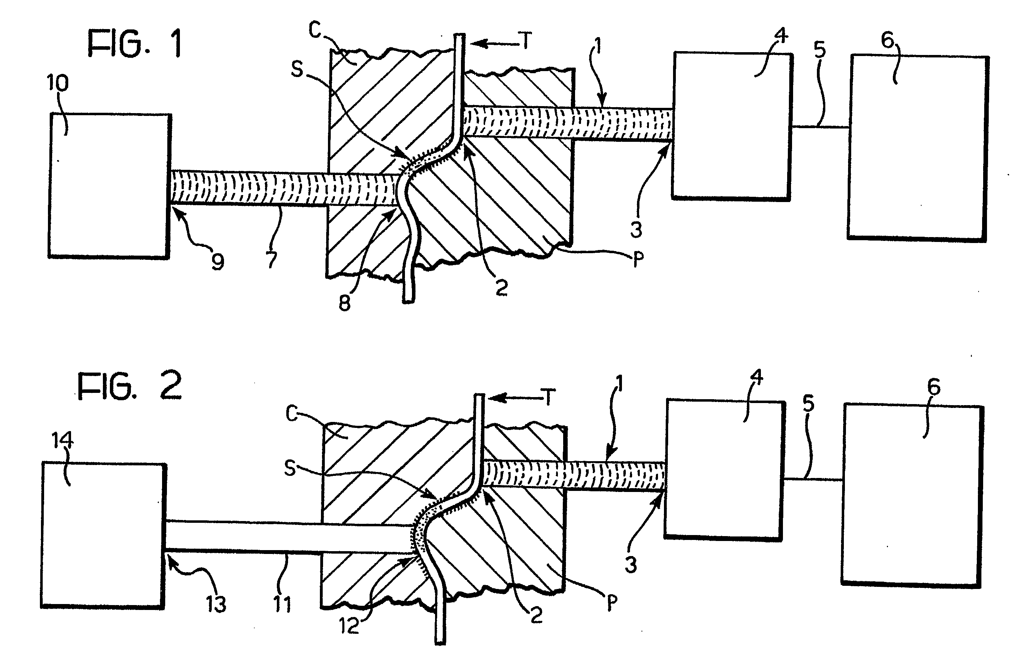

Figure 2 shows a tubular duct, generally indicated ll, having respective ends l2 and l3.

The end l2 of the duct ll extends through the die C in a configuration entirely similar to that of the end 8 of the duct 7 of Figure l.

The other end l3, however, terminates at a pressurised air supply l4.

More particularly, the duct ll may be constituted by an ultrasound guide entirely similar to the guide 7 of Figure l.

The function of the duct ll, however, is different in that this duct is intended solely to convey the pressurised air generated by the source 14 towards the surface of the part T gripped between the punch P and the die C.

The air may be at a pressure of between 1 and 6 atmospheres, the value considered preferable at present being about 2 to 3 atmospheres.

In the embodiment shown schematically in Figure I, the method of the invention is based on the observation that the propagation of the ultrasounds in air conveyed by the guide 7 to the guide I takes place solely in the production cracks in the region S, that is to say, only when there are tears, fissures or cracks in the region 6. In fact, the latter contain air which constitutes a propagation medium for the ultrasounds.

Consequently, the detection of the presence of production cracks in the part T may be carried out "in process", that is, during the pressing operation, the ultrasound generator I0 being activated and it being observed by means of the detector 4 whether the ultrasounds in air produced by the generator I0 are propagated not only through the guide 7 but also through the region S of the part and the guide I.

As indicated above, the propagation through the region S and the guide I takes place only if there are production cracks; the picking up of ultrasounds in air by the detector 4 is thus indicative of the presence of production cracks.

The embodiment illustrated schematically in Figure 2, however, is based on a different principle.

In this case, during the pressing operation, the source I4 is activated so as to direct pressurised air through the guide or duct II towards the part T. When production cracks are not present in the region S, the part T so to speak "stops" the guide II and acts as a shield against the ultrasounds produced by the smaller flow of air from the end I2, which are not able to propagate through the part T since it is flawless.

When there are production cracks in the region S, however, the pressurised air penetrates these cracks and enables the ultrasounds generated to be propagated both in correspondence with the end I2 and due to the interaction with the walls of these cracks. These ultrasounds in air are mainly in the frequency range around 40kHz and propagate in the guide I until they reach the detector 4. Again in this case, the detection of ultrasounds in air in correspondence with the region S is thus indicative of the presence of production cracks in this region.

Of the two possible embodiments of the invention, the embodiment illustrated in Figure I is more advantageous in terms of sensitivity of detection. The experiments carried out by the inventors have in fact shown that with this solution it is possible reliably to detect production cracks with an overall length of less than a centimetre and a width of less than 0.5 mm.

The solution schematically illustrated in Figure 2 has limits with regard to the sensitivity of detection, mainly due to the distribution of frequencies of the ultrasounds around the frequency of 40kHz. When this embodiment is chosen, it is more difficult to identify production cracks with overall lengths of less than I centimetre. It can be installed more easily, however, particularly with regard to the possibility of the use of simple tubes or ducts on the transmission side (that is, on the side of the die C in the embodiment illustrated in Figure 2) for conveying pressurised air and no guides for the ultrasounds, which, as is known, attenuate the ultrasounds themselves.

Moreover, the practicality of the ducts for the pressurised air is not seriously affected by the possible infiltration into the ducts themselves of oil or powder which may be present in the industrial environment in which the pressing is carried out. However, such infiltration can seriously compromise the operating characteristics of ultrasound propagation guides.

Figures 3 and 4 are two graphs in which the scale on the abscissa relates to the time coordinate and the scale on the ordinate relates to the changes in the signal (5';5") at the output 5 of the detector 4.

More particularly, the changes in the signal are illustrated in Figure 3 with reference to changes detectable during a pressing operation in which no production cracks are made. Figure 4 relates to changes in the signal detectable when the pressing operation causes such cracks to form.

In both Figures, a square-wave synchronising signal $S_C$ is shown in chain line, its course being indicative of the prosecution of the pressing operation. More particularly, the change in the synchronising signal $S_C$ to a high logic level is indicative of the moment at which the drawing process is started, that is, the moment at which the punch P starts to act on the part T. The ascending front and the descending front of the signal $S_C$ are thus respectively indicative of the start and finish of the pressing operation proper.

With reference to Figure 3, it can be noted that, even in the case in which no production cracks are formed, the detector 4 always picks up ultrasounds during the pressing operation, these being due essentially to the general noise of the pressing apparatus in which mechanical parts knock and slide against one another.

In each case the generation of these ultrasounds is caused in strictly predetermined time intervals.

More particularly, as illustrated in Figure 3, in the overall interval $\tau$ in which the pressing operation is carried out, there can be seen at least two time "windows" $W_1$ and $W_2$ in which - when the part T does not have cracks - the signal generated by the detector 4, indicated S', remains at around a nil value.

On the other hand, when the pressing operation results in the formation of production cracks (Figure 4), the signal generated by the detector 4, here indicated S", has an alternating or undulatory course even in the time windows $W_1$ and $W_2$, which is clearly distinguishable from the practically zero level observable in the absence of production cracks.

If the course of the signal generated by the detector 4 is observed during at least one selectively predetermined fraction (window $W_1$ or $W_2$ or both) of the time interval $\tau$ in which the pressing is carried out, it is possible to note the presence of production cracks without ambiguity.

A comparison of Figure 3 and Figure 4 also makes it possible to see that the signals S' (part without cracks) and S" (part with cracks) behave differently even at the end of the interval $\tau$. Thus, the detection may usefully be extended even for a certain period of time after the completion of the pressing operation.

If we leave out of consideration their different characteristics of sensitivity and the different degrees of difficulty of putting them into effect, the results obtainable from the embodiments of Figures I and 2 are essentially alike, particularly with regard to the course of the ultrasonic signal picked up by the detector 4.

Figure 5 illustrates in block schematic form the internal structure of the processing circuit 6 to which the signal at the output 5 of the detector 4 is supplied.

In this block diagram, an electrical supply unit, indicated I5, provides the operating power to all the other elements constituting the device 6 through lines, not illustrated.

When the embodiment of Figure I is used, the unit I5 may be used to advantage to supply the ultrasound generator I0.

The input circuit which amplifies and rectifies (after any conversion to low frequency) the signal present at the output of the detector 4 is indicated I6.

The output of the input circuit I6 is connected to a first threshold circuit for blocking and interrupting the propagation of signals whose amplitude is less than the predetermined threshold towards the other parts of the device 6. The circuit I7 is intended essentially to annul any disturbances or background noises which reach and/or are generated in the detector 4 and in the circuits associated therewith.

A counter circuit, indicated I8, counts the number of half waves or the alternations in the (rectified) signals which pass through the first threshold circuit I7.

The counter circuit I8 has an enabling input I8a at which a signal generated by a sensor I9 mounted on the pressing device (press) is present. The sensor I9 is able to detect the relative movement of the punch P and the die C.

In other words, the sensor I9 generates a signal approximately corresponding to the synchronising signal $S_C$ illustrated in Figure 3, enabling the counter I8 to operate only during the pressing operation.

The sensor I9 therefore has the task of making the counter I8 function only when necessary.

More precisely, the sensor I9 may be formed so as to enable the counter I8 only for a selectively predetermined fraction (such as, for example, one of the time windows $W_1$ or $W_2$) of the interval $\tau$ in which the pressing is carried out.

This avoids the counting carried out by the counter I8 being disturbed by spurious noise or signals which are not meaningful for the purposes of the detection of the presence of production cracks.

In the embodiment illustrated, the output signal of the sensor I9 is also directed to the counting input of a further counter 20 which totals the number of pressing operations carried out successfully by the press on which the detection device of the invention is mounted.

The counting signal emitted by the counter I8 is fed to the input of a further threshold circuit 2I. In the circuit 2I, the count value of the counter I8 is compared with a reference count defining the level of discrimination between the parts to be considered good, that is, without production cracks, and the parts wasted, that is, parts with cracks. The threshold level of the circuit 2I may be adjusted experimentally in dependence on the characteristics of the parts T and the pressing apparatus.

In general, parts for which the count of the counter I8 is less than the threshold of the comparator circuit 2I are considered good. The parts for which the count of the counter I8 surpasses the threshold are waste due to the presence of production cracks.

The need to throw away the part during pressing is indicated by a warning device such as an acoustic or optical warning device 22 activated by the comparator circuit 2I when the threshold is surpassed.

The operators may thus remove the defective part from the pressing line or operate the conveying apparatus associated therewith to discharge the part.

When an automatic conveyor line is used for the parts, the alarm signal emitted by the circuit 2I may be used to control a selector device which can convey the waste parts from the line.

The surpassing of the threshold level of the circuit 2I, indicative of the formation of a defective part due to the presence of production cracks, is also indicated to a further counter circuit 23 which totals the number of waste parts.

By comparing the count of the counter 20 (overall number of parts pressed) with the count of the counter 23 (number of parts wasted) and observing the changes of these values with time, the operators are able quickly to identify anomalous situations requiring stoppage of the production, adjustment of the pressing apparatus, or possibly replacement of the punch P and/or the die C worn by use quickly.

## Claims

1. Method for detecting the presence of production cracks in predetermined regions (S) of mechanical parts (T) including the step of detecting the presence of ultrasonic vibrations in the predetermined regions (S), such ultrasonic vibrations being indicative of the existence of production cracks in the part (T), characterised in that:
- said parts (T) are made by pressing between a punch (P) and a die (C), and
- during pressing, either ultrasonic vibrations in air adapted to be propagated by said cracks or pressurised air adapted to penetrate said cracks to enable ultrasonic vibrations in air to be generated and propagated by said cracks are conveyed (7, 11) towards said regions, whereby the presence of said ultrasonic vibrations in air during pressing indicates the presence of cracks.

2. Method according to claim 1, characterised in that it includes the step of generating, during pressing, ultrasonic vibrations in air in the predetermined regions (S) and on the side of the part (T) being pressed which faces one (C) of the punch (P) and the die (C), and the step of detecting the presence of ultrasonic vibrations in air in the predetermined regions (S) and on the side of the part (T) being pressed facing the other (P) of the punch (P) and the die (C).

3. Method according to any one of claims 1 or 2, in which the pressing action involves relative movement between the punch (P) and the die (C) for a predetermined time interval ($\tau$), characterised in that the step of detecting the presence of ultrasonic vibrations in air is carried out in at least a selectively predetermined fraction ($W_1$; $W_2$) of the interval ($\tau$).

4. Apparatus for detecting the presence of production cracks in predetermined regions (S) of mechanical parts (T) made by pressing between a punch (P) and a die (C), characterised in that it includes:
   - at least one guide (1) for propagating ultrasonic vibrations in air associated with one (P) of the punch (P) and the die (C) and having two opposite ends (2, 3), of which a first end (2) faces the surface of the mechanical part (T) in correspondence with one of the predetermined regions (S) during pressing,
   - a detector (4) of ultrasonic vibrations in air connected to the other end (3) of the at least one guide (1) for propagating ultrasounds in air,
   - at least one further guide (7) for the propagation of ultrasonic vibrations in air associated with the other (C) of the punch (P) and the die (C) and having two opposite ends (8, 9), of which a first end (8) faces the surface of the part (T) in correspondence with one of the predetermined regions (S) during pressing, and
   - a generator (10) of ultrasonic vibrations in air connected to the other end (9) of the at least one further guide (7) for propagating ultrasonic vibrations in air, whereby the presence of ultrasonic vibrations in air generated by said generator (10) and propagated by said guides (1, 7) and the cracks and detected during pressing by said detector (4) indicates the presence of said cracks.

5. Apparatus for detecting the presence of production cracks in predetermined regions (S) of mechanical parts (T) made by pressing between a punch (P) and a die (C), characterised in that it includes:
   - at least one guide (1) for propagating ultrasonic vibrations in air associated with one (P) of the punch (P) and the die (C) and having two opposite ends (2, 3), of which a first end (2) faces the surface of the mechanical part (T) in correspondence with one of the predetermined regions (S) during pressing,
   - a detector (4) of ultrasonic vibrations in air connected to the other end (3) of the at least one guide (1) for propagating ultrasounds in air,
   - a pressurised air supply (14), and
   - at least one duct (11) for conveying the pressurised air and having a first end (12) which faces the mechanical part (T) in correspondence with one of the predetermined regions (S) during pressing, and a second end (13) connected to the pressurised air supply (14), whereby the presence of ultrasonic vibrations in air generated by interaction of said pressurised air with said cracks and propagated by said cracks and detected by said detector (4) during pressing indicates the presence of such cracks.

6. Apparatus according to claim 4 or claim 5, characterised in that the detector (4) is sensitive mainly to ultrasonic vibrations in air having a frequency of the order of 40kHz.

7. Apparatus according to any of claims 4 to 6, characterised in that it includes:
   - an ultrasonic vibration detector (4) which can generate a generally alternating signal (S'; S") indicative of the changes in the pressure wave associated with the detected ultrasonic vibrations in air with time, and
   - a comparator circuit (18, 21) sensitive to the number of alternations in the signal generated by the ultrasonic vibration detector (4), the comparator circuit (18, 21) having a respective threshold of alternation and being able to generate an alarm signal (22) when the number of alternations of the signal generated by ultrasound detector (4) surpasses the alternation threshold level.

8. Apparatus according to claim 7, characterised in that it includes a sensor element (19) sensitive to the relative movement between the punch (P) and the die (C) and capable of generating an enabling signal (18a) for the comparator circuit (18, 21) in order to activate the comparator circuit (18, 21) only during at least one selectively predetermined time interval ($W_1$, $W_2$) in the pressing operation.

9. Apparatus according to claim 7 or claim 8, characterised in that there is interposed between the ultrasonic vibration detector (4) and the comparator circuit (18, 21) an auxiliary comparator circuit (17) which has a respective intensity threshold and is able to allow only those signals generated by the ultrasound detector (4) whose intensity surpasses the respective intensity threshold to be propagated to the comparator circuit (18, 21).

10. Apparatus according to claim 4, characterised in that the generator (10) produces ultrasonic vibrations with a frequency of the order of 40kHz.

11. Apparatus according to claim 5, characterised in that the supply (14) generates air at a pressure of substantially within the range of one to six atmospheres.

**Patentansprüche**

1. Verfahren zur Erfassung des Vorhandenseins von Produktionsrissen in vorbestimmten Bereichen (S) von mechanischen Teilen (T), mit dem Verfahrensschritt, daß in den vorbestimmten Bereichen (S) das Vorhandensein von Ultraschall-Schwingungen detektiert wird, die für die Existenz von Produktionsrissen in dem Teil (T) kennzeichnend sind, dadurch gekennzeichnet,
daß die Teile (T) durch Pressen zwischen einem Oberstempel (P) und einem Unterstempel (C) hergestellt werden,
und daß während des Pressens entweder
— Ultraschall-Luftschwingungen, die sich über die Risse ausbreiten können, oder
— Druckluft, die in die Risse eindringen kann, um die Erzeugung und Ausbreitung von Ultraschall-Luftschwingungen durch die Risse zu ermöglichen, zu den genannten Bereichen gefördert werden (7, 11),
wobei das Auftreten der Ultraschall-Luftschwingungen während des Pressens das Vorhandensein von Rissen kennzeichnet.

2. Verfahren nach Anspruch 1, gekennzeichnet durch
den Verfahrensschritt, daß während des Pressens in den vorbestimmten Bereichen (S) und auf der Seite des dem Preßvorgang unterworfenen Teils (T) die dem einen (C) der Oberstempel (P) oder Unterstempel (C) zugekehrt ist, Ultraschall-Luftschwingungen erzeugt werden,
und den Verfahrensschritt, daß das Vorhandensein von Ultraschall-Luftschwingungen in den vorbestimmten Bereichen (S) und auf der Seite des dem Preßvorgang unterworfenen Teils (T) detektiert wird, die dem anderen (P) der Oberstempel (P) oder Unterstempel (C) zugekehrt ist.

3. Verfahren nach Anspruch 1 oder 2, bei dem der Preßvorgang während eines vorbestimmten Zeitintervalls ($\tau$) ·mit einer Relativbewegung zwischen dem Oberstempel (P) und dem Unterstempel (C) verbunden ist, dadurch gekennzeichnet, daß der Verfahrensschritt der Detektierung des Auftretens von Ultraschall-Luftschwingungen in zumindest einem selektiv vorbestimmten Teil ($W_1$, $W_2$) des Zeitintervalls ($\tau$) durchgeführt wird.

4. Gerät zur Überprüfung des Vorhandenseins von Produktionsrissen in vorbestimmten Bereichen (5) von mechanischen Teilen (T), die durch Pressen zwischen einem Oberstempel (P) und einem Unterstempel (C) hergestellt werden, gekennzeichnet durch
wenigstens eine Führung (1) zur Übertragung von Ultraschall-Luftschwingungen, die dem einen (P) der Oberstempel (P) oder Unterstempel (C) zugeordnet ist und zwei entgegengesetzte Enden (2, 3) aufweist, von denen das erste (2) während des Pressens in einem der vorbestimmten Bereiche (S) der Oberfläche des mechanischen Teils (T) zugekehrt ist,
einen Detektor (4) für Ultraschall-Luftschwingungen, der mit dem anderen Ende (3) der wenigstens einen Führung (1) zur Übertragung von Ultraschall-Luftschwingungen verbunden ist,
wenigstens eine weitere Führung (7) zur Übertragung von Ultraschall-Luftschwingungen, die dem anderen (C) der beiden Komponenten Oberstempel (P) oder Unterstempel (C) zugeordnet ist und zwei entgegengesetzte Enden (8, 9) besitzt, von denen das erste (8) während des Pressens in einem der vorbestimmten Bereiche (S) der Oberfläche des Teils (T) zugekehrt ist,
sowie einen Generator (10) für Ultraschall-Luftschwingungen, der mit dem anderen Ende (9) der wenigstens einen weiteren Führung (7) zur Übertragung Ultraschall-Luftschwingungen verbunden ist,
wobei das Auftreten von durch den Generator (10) erzeugten und durch die Führungen (1, 7) und die Risse ausgebreiteten und während des Pressens von Detektor (4) erfaßten Ultraschall-Luftschwingungen das Vorhandensein der Risse anzeigt.

5. Gerät zur Überprüfung des Vorhandenseins von Produktionsrissen in vorbestimmten Bereichen (S) von mechanischen Teilen (T), die durch Pressen zwischen einem Oberstempel (P) und einem Unterstempel (C) hergestellt werden, gekennzeichnet durch
wenigstens eine Führung (1) zur Übertragung von Ultraschall-Luftschwingungen, die einem (P) der beiden Komponenten Oberstempel (P) oder Unterstempel (C) zugeordnet ist und zwei entgegengesetzte Enden (2, 3) aufweist, von denen das erste (2) während des Pressens in einem der vorbestimmten Bereiche (S) der Oberfläche des mechanischen Teils (T) zugekehrt ist,
einen Detektor (4) für Ultraschall-Luftschwingungen, der mit dem anderen Ende (3) der wenigstens einen Führung (1) zur Ausbreitung von Ultraschall-Luftschwingungen verbunden ist,
eine Druckluft-Versorgung (14),
sowie wenigstens eine Leitung (11) zum Fördern der Druckluft mit einem ersten Ende (12), das dem mechanischen Teil (T) während des Pressens in einem der vorbestimmten (S) zugekehrt ist, und einem zweiten Ende (13), das mit der Druckluft-Versorgung (14) verbunden ist,
wobei das Auftreten von Ultraschall-Luftschwingungen, die während des Pressens durch Wechselwirkung der Druckluft mit den Rissen erzeugt, durch die Risse ausgebreitet und durch den Detektor (4) erfaßt werden, das Vorhandensein solcher Risse anzeigt.

6. Gerät nach Anspruch 4, dadurch gekennzeichnet, daß der Detektor (4) vorwiegend für Ultraschall-Luftschwingungen mit einer Frequenz in der Größenordnung von 40 kHz empfindlich ist.

7. Gerät nach einem der Ansprüche 4 bis 6, gekennzeichnet durch
einen Detektor (4) für Ultraschall-Schwingungen zur Erzeugung eines im allgemeinen alternierenden Signals (S'; S), der für den zeitlichen Änderungen der den detektierten Ultraschall-Luftschwingungen zugeordneten Druckwelle kennzeichnend ist,
und eine Komparatorschaltung (18, 21), die auf die Anzahl der Wechsel in dem durch die Ultraschall-Luftschwingungen erzeugten Signal anspricht, wobei diese Komparatorschaltung (18, 21) eine entsprechenden Schwellwert für die Zahl der Wechsel aufweist und ein Alarm-Signal (22) erzeugt, wenn die Anzahl der Wechsel in dem von dem Ultraschall-Schwingungs-Detektor (4) erzeugten Signal den Schwellwert überschreitet.

8. Gerät nach Anspruch 7, dadurch gekennzeichnet, daß es ein Sensorelement (19) aufweist, das auf die Relativbewegung zwischen Oberstempel (P) und Unterstempel (C) anspricht und ein Freigabe-Signal (18a) für die Komparatorschaltung (18, 21) erzeugt, um diese nur während wenigstens einem selektiv vorbestimmten Zeitintervall (W₁, W₂) innerhalb des Preßvorgangs zu aktivieren.

9. Gerät nach Anspruch 7 oder 8, dadurch gekennzeichnet, daß zwischen dem Ultraschall-Schwingungs-Detektor (4) und der Komparatorschaltung (18, 21) eine zusätzliche Komparatorschaltung (17) angeordnet ist, die einen entsprechenden Intensitäts-Schwellwert besitzt und die es ermöglicht, daß nur diejenigen der von dem Ultraschall-Schwingungs-Detektor (4) erzeugten Signale, deren Intensität diesen Intensitäts-Schwellwert überschreitet, zu der Komparatorschaltung (18, 21) weitergeleitet werden.

10. Gerät nach Anspruch 4, dadurch gekennzeichnet, daß der Generator (10) Ultraschall-Luftschwingungen mit einer Frequenz in der Größenordnung von 40 kHz erzeugt.

11. Gerät nach Anspruch 5, dadurch gekennzeichnet, daß die Druckluft-Versorgung (14) Luft mit einem Druck erzeugt, der im wesentlichen im Bereich von 1 bis 6 Atmosphären liegt.

## Revendications

1. Procédé de détection de la présence de fissures formées pendant la fabrication dans des régions prédéterminées (S) de pièces mécaniques (T), comprenant une étape de détection de la présence de vibrations ultrasonores dans les régions prédéterminées (S), ces vibrations ultrasonores étant représentatives de l'existence de fissures formées pendant la fabrication dans la pièce (T), caractérisé en ce que
   - les pièces (T) sont fabriquées par pressage entre un poinçon (P) et une matrice (C), et
   - pendant le pressage, soit des vibrations ultrasonores de l'air qui sont destinées à se propager dans les fissures soit de l'air comprimé destiné à pénétrer dans les fissures afin qu'il permette la création de vibrations ultrasonores de l'air et leur propagation dans les fissures, sont transportés (7, 11) vers lesdites régions, si bien que la présence des vibrations ultrasonores de l'air au cours du pressage indique la présence de fissures.

2. Procédé selon la revendication 1, caractérisé en ce qu'il comprend une étape de création, pendant le pressage, de vibrations ultrasonores dans l'air dans des régions prédéterminées (S) et du côté de la pièce (T) soumise au pressage qui est tourné vers le poinçon (P) ou la matrice (C), et l'étape de détection de la présence de vibrations ultrasonores dans l'air dans les régions prédéterminées (S) et du côté de la pièce (T) qui est pressée qui est tourné vers la matrice (C) ou le poinçon (P) respectivement.

3. Procédé selon l'une des revendications 1 et 2, dans lequel l'action de pressage comprend un déplacement relatif du poinçon (P) et de la matrice (C) pendant un intervalle prédéterminé de temps (τ), caractérisé en ce que l'étape de détection de la présence de vibrations ultrasonores dans l'air est réalisée au moins dans une fraction sélectivement prédéterminée (W₁ ; W₂) de l'intervalle (τ).

4. Appareil de détection de la présence de fissures formées pendant la fabrication dans des régions prédéterminées (S) de pièces mécaniques (T) formées par pressage entre un poinçon (P) et une matrice (C), caractérisé en ce qu'il comprend :
   - au moins un guide (1) destiné à la propagation des vibrations ultrasonores dans l'air et associé au poinçon (P) ou à la matrice (C) et ayant deux extrémités opposées (2, 3) dont une première extrémité (2) est tournée vers la surface de la pièce métallique (T) à un emplacement correspondant à l'une desdites régions prédéterminées (S) au cours du pressage,
   - un détecteur (4) de vibrations ultrasonores dans l'air, connecté à l'autre extrémité (3) du guide (1) au moins afin qu'il assure la propagation d'ultrasons dans l'air,
   - au moins un guide supplémentaire (7) destiné à assurer la propagation de vibrations ultrasonores dans l'air et associé à la matrice (C) ou au poinçon (P) respectivement et ayant deux extrémités opposées (8, 9) dont la première extrémité (8) est tournée vers la surface de la pièce (T) qui correspond à l'une des régions prédéterminées (S) en cours de pressage, et
   - un générateur (10) de vibrations ultrasonores dans l'air, connecté à l'autre extrémité (9) du guide supplémentaire (7) au moins afin que les vibrations ultrasonores se propagent dans l'air, si bien que la présence de vibrations ultrasonores dans l'air, créées par le générateur (10) et qui se propagent dans les guides (1, 7) et les fissures et sont détectées pendant le pressage par le détecteur (4), indique la présence des fissures.

5. Appareil de détection de la présence de fissures formées pendant la fabrication dans des régions prédéterminées (S) de pièces mécaniques (T) formées par pressage entre un poinçon (P) et une matrice (C), caractérisé en ce qu'il comprend :
   - au moins un guide (1) destiné à la propagation de vibrations ultrasonores dans l'air et associé au poinçon (P) ou à la matrice (C) et ayant deux extrémités opposées (2, 3) dont une première extrémité (2) est tournée vers la surface de la pièce métallique (T) qui correspond à l'une des régions prédéterminées (S) pendant le pressage,
   - un détecteur (4) de vibrations ultrasonores dans l'air, connecté à l'autre extrémité (3) du guide (1) au moins afin qu'il assure la propagation d'ultrasons dans l'air,
   - une alimentation (14) en air comprimé, et
   - au moins un conduit (11) destiné à transporter l'air comprimé et ayant une première extrémité (12) qui est tournée vers la pièce mécanique (T) à un emplacement correspondant à l'une des régions prédéterminées (S) au cours du pressage, et une seconde extrémité (13) connectée à l'alimentation (14) en air comprimé, si bien que la présence de vibrations ultrasonores dans l'air, créées par interaction de l'air comprimé avec les fissures et qui sont propagées par les fissures et sont détectées par le détecteur (4) pendant le pressage indique la présence de telles fissures.

6. Appareil selon la revendication 4 ou 5, caractérisé en ce que le détecteur (4) est sensible essentiellement à des vibrations ultrasonores dans l'air ayant une fréquence de l'ordre de 40 kHz.

7. Appareil selon l'une quelconque des revendications 4 à 6, caractérisé en ce qu'il comprend :
- un détecteur (4) de vibrations ultrasonores qui peut créer un signal alternant de façon générale (S' ; S") et représentatif des variations de l'onde de pression associée aux vibrations ultrasonores détectées dans l'air au cours du temps, et
- un circuit comparateur (18, 21) sensible au nombre d'alternances du signal créé par le détecteur (4) de vibrations ultrasonores, le circuit comparateur (18, 21) ayant un seuil respectif d'alternances et pouvant créer un signal d'alarme (22) lorsque le nombre d'alternances du signal créé par le détecteur ultrasonore (4) dépasse un niveau de seuil d'alternances.

8. Appareil selon la revendication 7, caractérisé en ce qu'il comprend un élément capteur (19) sensible au déplacement relatif du poinçon (P) et de la matrice (C) et capable de créer un signal de validation (18a) destiné au circuit comparateur (18, 21) afin que le circuit comparateur (18, 21) soit activé uniquement pendant au moins un intervalle de temps sélectivement prédéterminé ($W_1$, $W_2$) au cours de l'opération de pressage.

9. Appareil selon la revendication 7 ou 8, caractérisé en ce qu'un circuit comparateur auxiliaire (17) est placé entre le détecteur (4) de vibrations ultrasonores et le circuit comparateur (18, 21) et a un seuil respectif d'intensité et ne permet le passage que des signaux créés par le détecteur ultrasonore (4) dont l'intensité dépasse le seuil respectif d'intensité afin qu'ils se propagent vers le circuit comparateur (18, 21).

10. Appareil selon la revendication 4, caractérisé en ce que le générateur (10) crée des vibrations ultrasonores avec une fréquence de l'ordre de 40 kHz.

11. Appareil selon la revendication 5, caractérisé en ce que l'alimentation (14) crée de l'air à une pression qui est pratiquement comprise entre 1 et 6 atmosphères.

FIG. 1

FIG. 2

EP 0 217 758 B1

FIG. 3

FIG. 4

FIG. 5